# EUROPEAN PATENT APPLICATION

(11) **EP 1 345 429 A2**
(43) Date of publication of application: **17.09.2003**
(21) Application number: 03001882.4
(22) Date of filing: 29.01.2003
(51) Int. Cl.: H04N 5/76

(54) **Digital broadcasting reception apparatus and control method**

(30) Priority: 15.03.2002 JP 2002073177
(71) Applicant: Kabushiki Kaisha Toshiba, Minato-ku, Tokyo 105 (JP)
(72) Inventor: Nishimura, Atsushi, c/o Kabushiki Kaisha Toshiba, Minato-ku Tokyo 105-8001 (JP)
(74) Representative: Henkel, Feiler, Hänzel

(57) **Abstract**

There is disclosed a digital broadcasting reception apparatus comprising a reception unit (13) which receives digital broadcasting and extracts predetermined program information, a recording unit (35) which digitally records program information obtained by the reception unit (13), an external apparatus control unit (32) which allows a recording apparatus (34) connected to the outside to digitally record the program information obtained by the reception unit (13), and a control unit (24) to allow the recording apparatus (34) to record program information which cannot be recorded in the recording unit (35) any more, when the remaining recordable time of the recording unit (35) is shorter than the total time of the program information to be recorded.

## Description

The present invention relates to a digital broadcasting reception system which receives, for example, digital television broadcasting, particularly to improvements in a digital broadcasting reception apparatus which digitally records stream information of a received program onto a recording medium disposed therein, and a control method of the apparatus.

As well known, in recent years, digital television broadcasting using, for example, satellite and cable has actively been performed. Moreover, for a digital broadcasting receiver which receives this type of digital television broadcasting, there has been spread an apparatus which includes a hard disk drive (HDD) and digitally records stream information of a received program on the hard disk.

Additionally, in this digital broadcasting receiver including the HDD, for a user to reserve recording of a predetermined program with a timer, a countermeasure is indispensable when the total recording time is longer than the free space of the hard disk, that is, the remaining recordable time.

Concerning this respect, for example, in Jpn. Pat. Appln. KOKAI Publication No. 2001-160281, it is described that with a remaining space of the hard disk smaller than an estimated recording time, the compression ratio of data at the recording time is changed to change the recording mode within the remaining space of the hard disk, or a message indicating non-start of the recording is displayed.

However, the method of changing the compression ratio of the data at the recording time cannot be used with digital television broadcasting. This is because digital television broadcasting is of a stream form with video, audio, and other information data existing therein in a mixed manner, and therefore a compression process cannot freely be executed on a reception side. Moreover, it is apparent that to display the message indicating non-start of the recording is not a positive problem solution.

It is to be noted that a technique of continuously recording data having continuity into a plurality of recording mediums and preventing the recording from being discontinued is disclosed in Jpn. Pat. Appln. KOKAI Publication No. 2001-320659. Further in Jpn. Pat. Appln. KOKAI Publication No. 2001-186450, it is disclosed that data is scattered/recorded in a plurality of recording mediums based on a recording order set in accordance with vacant states of a plurality of recording mediums.

However, in any one of these publications, digital data transmitted in a network system is an object, and it is not described that the stream information of the program in the digital television broadcasting is recorded.

That is, in the present circumstances, to reserve the recording of the stream information of the program in the digital television broadcasting in a recording/reproducing apparatus included in the digital broadcasting receiver, there is a problem that no effective countermeasure for insufficient free space of the recording medium is taken.

One embodiment of the present invention may provide a digital broadcasting reception apparatus and control method in which to reserve recording of program information in an included recording medium, and an external recording apparatus can be used to record information without any interruption even with an insufficient remaining free space of the recording medium.

According to one aspect of the present invention, there is provided a digital broadcasting reception apparatus comprising:
a reception unit configured to receive digital broadcasting and extract predetermined program information;
a recording unit configured to digitally record program information obtained by the reception unit;
an external apparatus control unit configured to allow a recording apparatus connected to the outside to digitally record program information obtained by the reception unit; and
a control unit configured to allow the recording apparatus to record program information which cannot be recorded in the recording unit any more, when the remaining recordable time of the recording unit is shorter than the total time of the program information to be recorded.

According to one aspect of the present invention, there is provided a control method of a digital broadcasting reception apparatus including a reception unit adapted to receive digital broadcasting and extract predetermined program information, a recording unit adapted to digitally record program information obtained by the reception unit, and an external apparatus control unit to allow a recording apparatus connected to the outside to digitally record the program information obtained by the reception unit, the method comprising:
controlling the digital broadcasting reception apparatus so as to record the program information which cannot be recorded in the recording unit any more in the recording apparatus, when the remaining recordable time of the recording unit is shorter than the total time of the program information to be recorded.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block constitution diagram showing a digital broadcasting receiver according to a first embodiment of the present invention;
FIG. 2 is a flowchart showing a major recording operation in the first embodiment;
FIG. 3 is a diagram showing a recording operation of HDD and a recording operation of a D-VHS apparatus in the first embodiment in a time series manner;
FIG. 4 is a block constitution diagram showing the digital broadcasting receiver according to a second embodiment of the present invention;
FIG. 5 is an explanatory view of EIT of program arrangement information included in a digital broadcasting in the second embodiment;
FIG. 6 is a flowchart showing a major recording operation in the second embodiment;
FIG. 7 is a block constitution diagram showing the digital broadcasting receiver according to a third embodiment of the present invention;
FIG. 8 is a flowchart showing the major recording operation in the third embodiment;
FIG. 9 is a block constitution diagram showing the digital broadcasting receiver according to a fourth embodiment of the present invention;
FIG. 10 is a flowchart showing the major recording operation in the fourth embodiment;
FIG. 11 is a flowchart showing the major recording operation in a fifth embodiment of the present invention; and
FIG. 12 is an explanatory view showing the recording operation of HDD and recording operation of the D-VHS apparatus in the fifth embodiment in the time series manner.

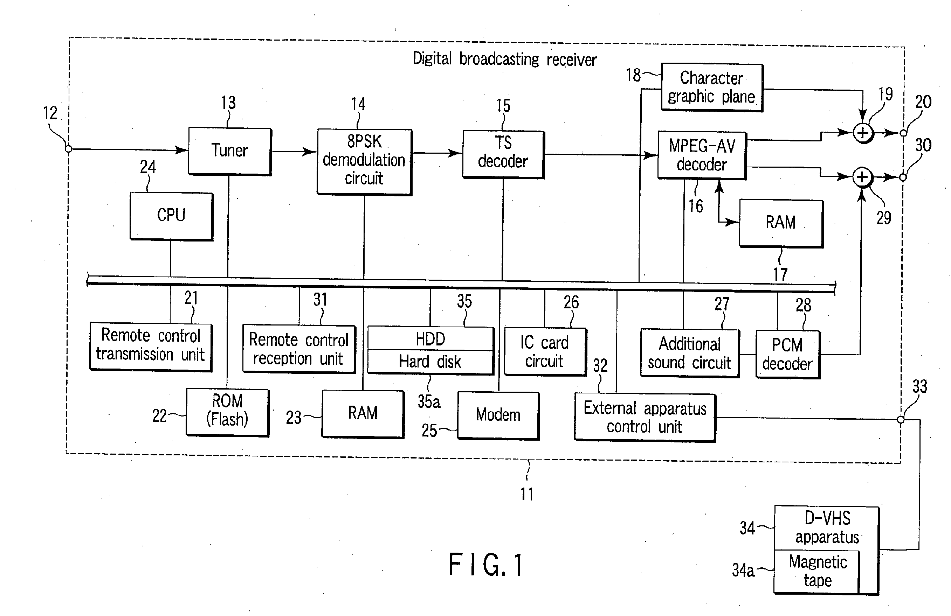

A first embodiment of the present invention will be described hereinafter in detail with reference to the drawings. FIG. 1 shows a constitution of a digital broadcasting receiver 11 described in the first embodiment. That is, a high-frequency signal supplied to an input terminal 12 from a satellite is supplied to a tuner 13, and a signal component of a predetermined frequency is extracted.

The signal component extracted by the tuner 13 is supplied to an 8 phase shift keying (PSK) demodulation circuit 14 and subjected to a PSK demodulation process. The signal subjected to the PSK demodulation process in the 8PSK demodulation circuit 14 is supplied to a transport stream (TS) decoder 15 and subjected to decode processing of the transport stream.

A moving picture image coding experts group (MPEG)-audio video (AV) decoder 16 receives data of MPEG from the TS decoder 15, and uses a random access memory (RAM) 17 as a memory for operation to decode video and audio signals.

Moreover, a character graphic plane 18 converts channel numbers and characters of a program table, and character graphic information of data broadcasting into the video signal. Moreover, the respective video signals output from the MPEG-AV decoder 16 and character graphic plane 18 are synthesized by a synthesis circuit 19, and taken out to the outside from a video output terminal 20. For example, a monitor (not shown) is connected to the video output terminal 20, and video display is performed.

On the other hand, a remote control transmission unit 21 generates instructions of recording start and stop to an external video tape recorder (VTR) (not shown). A read only memory (ROM) 22 is a flash memory for storing program to control the whole digital broadcasting receiver 11.

A RAM 23 is used for operation of a central processing unit (CPU) 24. The CPU 24 controls the whole operation of the digital broadcasting receiver 11 based on the program of the ROM 22. A modem 25 has a function of transmitting/receiving data with respect to a telephone circuit.

An integrated circuit (IC) card circuit 26 has a function of interfacing with an IC card for obtaining user information of a limited reception system. An additional sound circuit 27 has a function of generating an additional sound designated by data broadcasting. A pulse code modulation (PCM) decoder 28 generates the audio signal from additional sound information.

The respective audio signals outputted from the MPEG-AV decoder 16 and PCM decoder 28 are synthesized in a synthesis circuit 29, and taken out to the outside via an audio output terminal 30. The audio output terminal 30 is connected, for example, to a speaker (not shown), and audio reproduction is performed.

A remote control reception unit 31 receives an operation signal from a remote controller (not shown) for a user to perform a reception operation. The CPU 24 executes change processing of a display state of the digital broadcasting receiver 11 based on the operation signal received by the remote control reception unit 31.

An external apparatus control unit 32 controls an external apparatus connected [i.LINK (registered trademark) connection] via a connection terminal 33 and controls data communication based on the Institute of Electrical & Electronics Engineers (IEEE) 1394 standard. FIG. 1 shows an example in which a digital (D)-video home system (VHS) apparatus 34 using a magnetic tape 34a as a recording medium is connected as an external apparatus.

An HDD 35 digitally records stream information of a received program on a hard disk 35a.

Moreover, in this first embodiment, while the stream information of the received program is recorded on the hard disk 35a, and when the free space of the hard disk 35a becomes smaller than a predetermined value, the D-VHS apparatus 34 as the external apparatus is automatically driven, and controlled so as to start writing of the stream information onto the magnetic tape 34a.

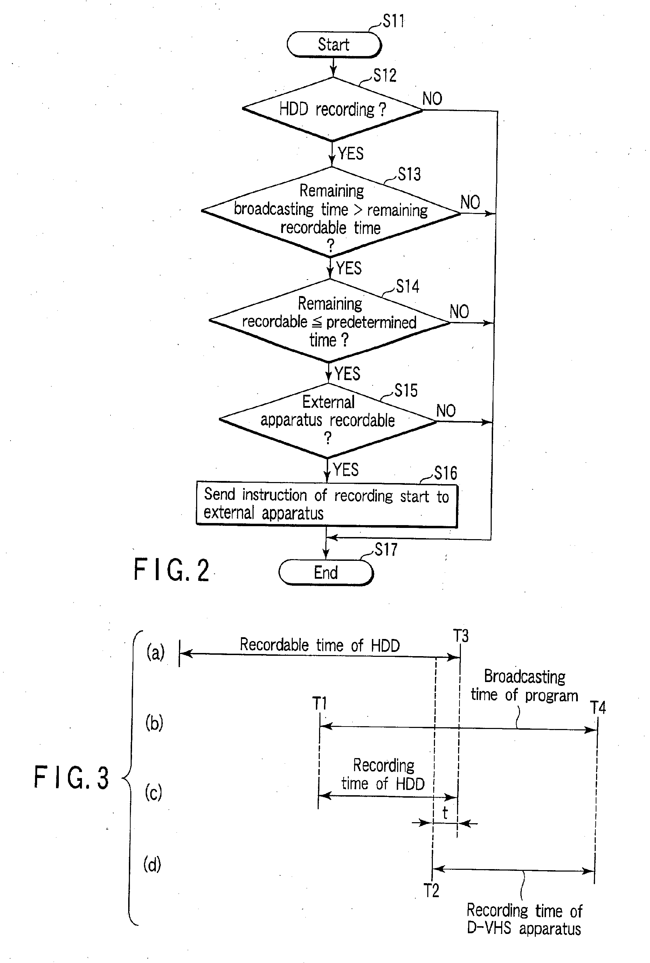

FIG. 2 shows a flowchart of a major operation in the first embodiment. First, the operation is started (step S11), and the CPU 24 judges in step S12 whether or not the stream information of the program is being recorded in the HDD 35. It is judged that the information is not being recorded (NO), and then this process is ended (step S17).

Moreover, it is judged that the information is being recorded (YES), and the CPU 24 judges in step S13 whether or not the remaining broadcasting time of a reserved/recorded program is longer than the remaining recordable time of the HDD 35. When the time is judged to be equal or shorter (NO), the process is ended (step S17).

It is judged in step S13 that the remaining broadcasting time of the program reserved to be recorded is longer than the remaining recordable time of the HDD 35 (YES), and then the CPU 24 judges in step S14 whether or not the remaining recordable time of the HDD 35 is shorter than a predetermined time. It is judged that the time is not short (NO), and the process ends (step S17).

Moreover, it is judged in step S14 that the remaining recordable time of the HDD 35 is equal to or shorter than the predetermined time (YES), and then the CPU 24 judges in step S15 whether or not the external apparatus (D-VHS apparatus 34) is recordable. It is judged that the apparatus is not recordable (NO), and then the process ends (step S17).

On the other hand, it is judged that the external apparatus is recordable (YES). In this case, the CPU 24 sends an instruction of recording start to the D-VHS apparatus 34 via the external apparatus control unit 32 in step S16, and ends the process (step S17).

FIG. 3 shows a recording operation of the HDD 35 and a recording operation of the D-VHS apparatus 34 in a time series manner. First, at a predetermined time T1 in the recordable time of the HDD 35 shown in (a) of FIG. 3, as shown in (b) of FIG. 3, the broadcasting of the program reserved to be recorded starts. Then, as shown in (c) of FIG. 3, the HDD 35 starts the recording operation at the same time T1.

Subsequently, at a time T2 before a time T3 to end the recordable time of the HDD 35 by a predetermined time t, as shown in (d) of FIG. 3, the recording operation of the D-VHS apparatus 34 is started. Thereafter, when the broadcasting of the program is ended at time T4, the recording operation of the D-VHS apparatus 34 is also ended.

According to the first embodiment, when the recordable time of the HDD 35 is within a predetermined time during the recording operation of the program reserved to be recorded, the recording operation is started with respect to the external D-VHS apparatus 34. The stream information which cannot be recorded in the HDD 35 is recorded in the D-VHS apparatus 34. Therefore, it is possible to record the stream information of the program in the digital television broadcasting without being interrupted.

Here, as described above, the instruction of the recording start with respect to the D-VHS apparatus 34 is sent from the external apparatus control unit 32 via the connection terminal 33. Additionally, the operation signal from the remote control transmission unit 21 may also be transmitted to the D-VHS apparatus 34. In this case, the video output terminal 20 and audio output terminal 30 may also be connected to the corresponding input terminal of the D-VHS apparatus 34.

Moreover, an order of execution of the process of steps S13 to S15 is not limited to the order shown in FIG. 2, and may also be an arbitrary order.

Furthermore, the D-VHS apparatus 34 is instructed to start the recording before the predetermined time at which the remaining recordable time of the HDD 35 completely ends. Therefore, this can prevent a problem that the program cannot be recorded at a switch time to D-VHS apparatus 34 from the HDD 35.

Additionally, a method of checking whether or not the D-VHS apparatus 34 is recordable may be a method of acquiring apparatus information in accordance with presence/absence of the instruction from the user of the digital broadcasting receiver 11 or communication with the D-VHS apparatus 34 by the external apparatus control unit 32 which conforms to IEEE 1394 standard.

It is to be noted that the reception of digital broadcasting using a satellite has been described above in the first embodiment. The present invention is not limited to the embodiment, and can also broadly be applied, for example, to CATV and a digital broadcasting receiver which receives terrestrial digital broadcasting.

Moreover, the external apparatus is not limited to the D-VHS apparatus 34, and it is also possible to use a recording/reproducing apparatus in which recording mediums such as an optical disc and semiconductor memory are used.

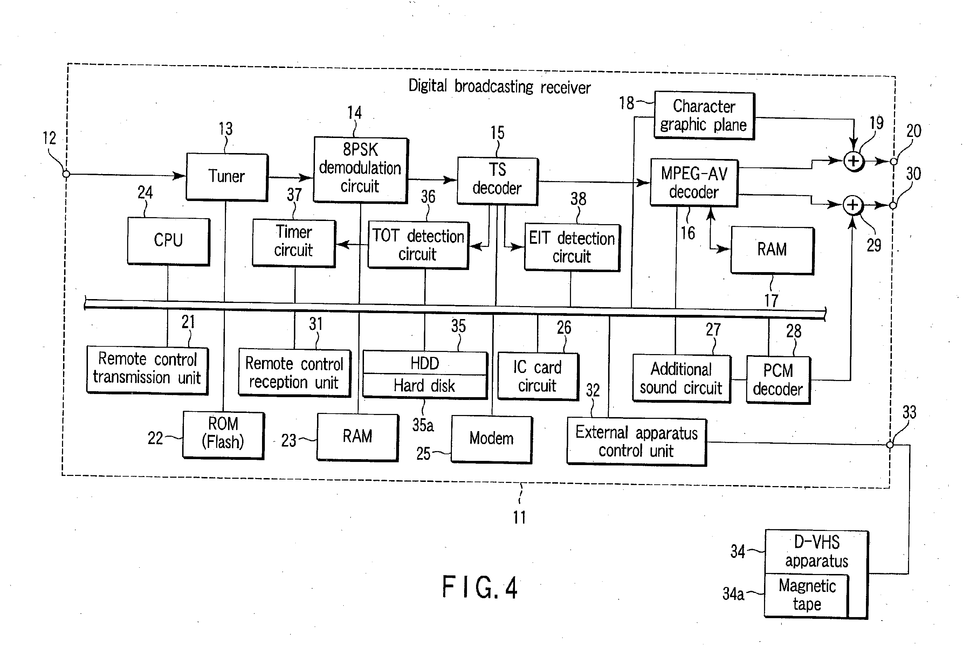

A second embodiment of the present invention will next be described. In FIG. 4, the same components as those of FIG. 1 are denoted with the same reference numerals. First, a time offset table (TOT) detection circuit 36 acquires time information for taking out TOT from the stream information obtained from the TS decoder 15, and outputs the information to a timer circuit 37. The timer circuit 37 counts the present time based on the inputted time information. Thereby, the present time synchronized with a broadcasting wave can be known.

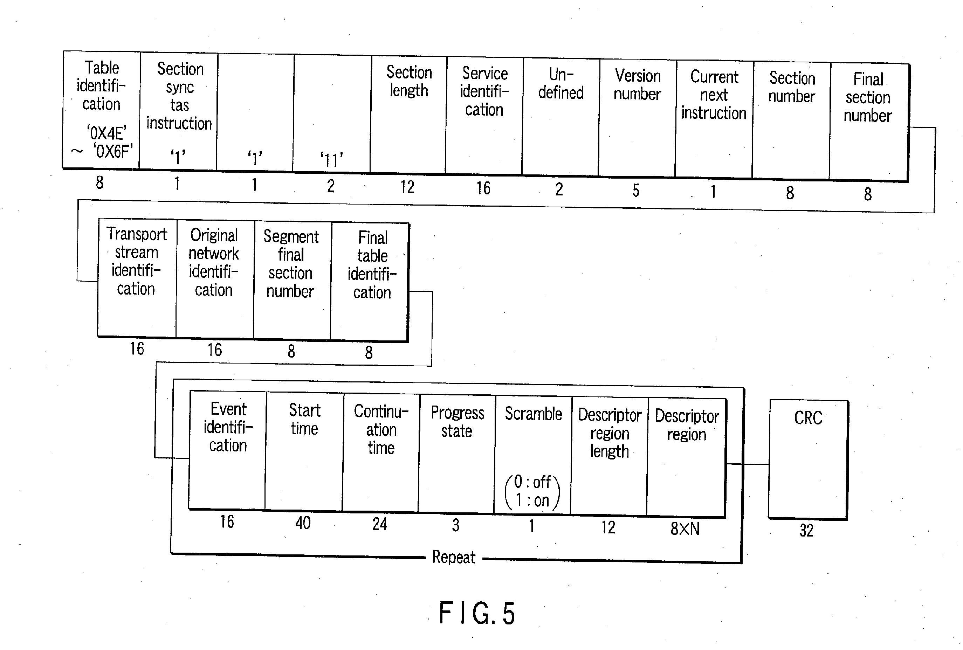

On the other hand, an event information table (EIT) detection circuit 38 extracts EIT from the stream information obtained from the TS decoder 15, and acquires a start or end time of the program (event) or genre information. That is, in the digital broadcasting, program arrangement information is transmitted together with program information, and the program arrangement information includes TOT and EIT. FIG. 5 shows details of the EIT.

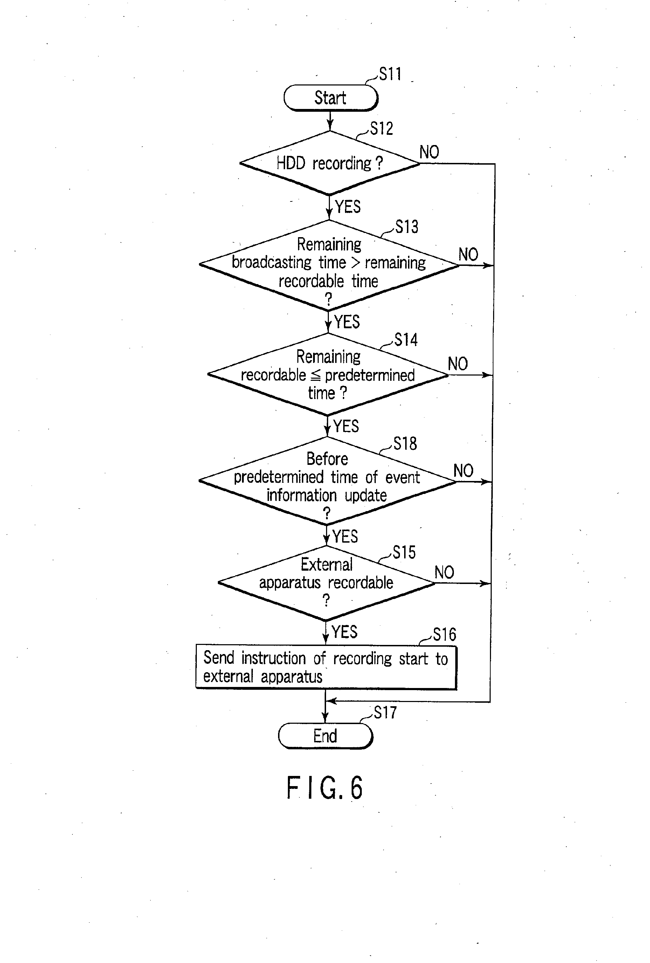

FIG. 6 shows a flowchart showing the whole major operation in the second embodiment. In FIG. 6, the same steps as those of FIG. 2 are denoted with the same reference numerals.

In step S14 it is judged that the remaining recordable time of the HDD 35 is equal to or shorter than the predetermined time (YES). Then, the CPU 24 judges in step S18 whether or not it is before a predetermined time to update event information of the recorded program. If it is judged that it is not before the predetermined time (NO), the process is ended (step S17). If it is judged that it is before the predetermined time (YES), the process shifts to a process of step S15.

That is, according to the second embodiment, when the remaining recordable time of the HDD 35 is, for example, 30 minutes or less, at a time one minute before an event in the program being broadcasted by EIT ends, the D-VHS apparatus 34 can be instructed to start the recording.

Thereby, the stream information is always recorded in the D-VHS apparatus 34 from the top of the event, and is easily seen by the user at reproduction time. It is to be noted that the instruction of the recording start to the D-VHS apparatus 34 may be given after an elapse of the predetermined time since the update of the event information.

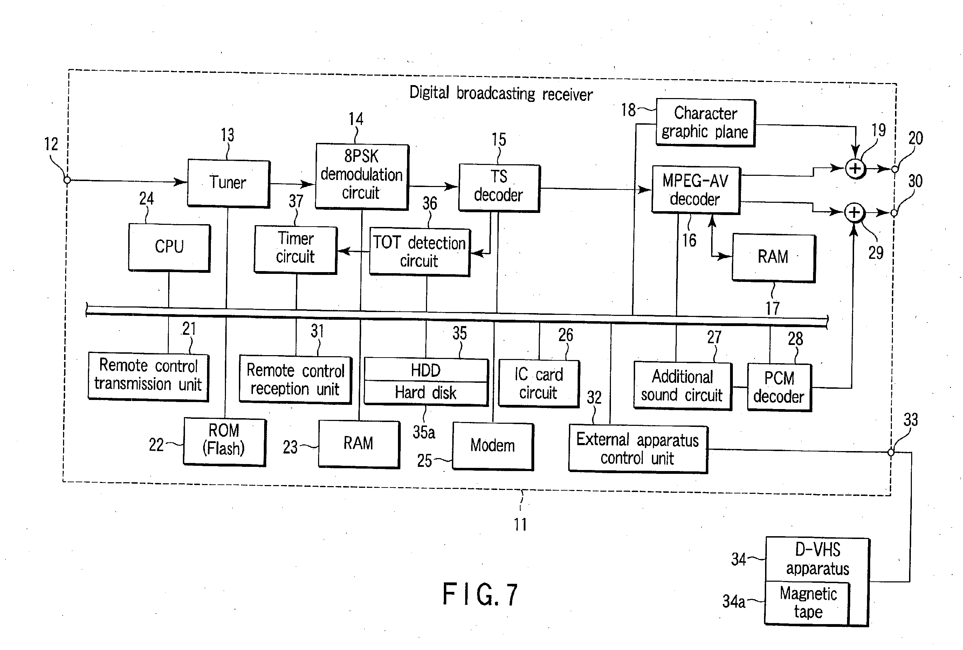

A third embodiment of the present invention will next be described. In FIG. 7, the same components as those of FIG. 4 are denoted with the same reference numerals. That is, the EIT detection circuit 38 is omitted from FIG. 4.

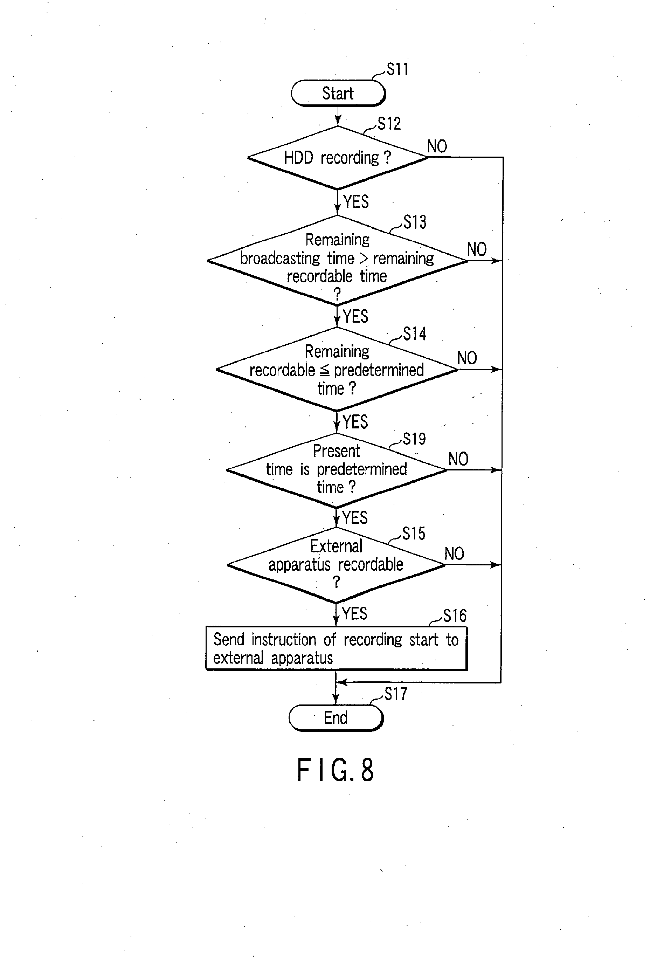

FIG. 8 shows a flowchart of the whole major recording operation in the third embodiment. In FIG. 8, the same steps as those of FIG. 2 are denoted with the same reference numerals.

In step S14 it is judged that the remaining recordable time of the HDD 35 is equal to or shorter than the predetermined time (YES). Then, the CPU 24 judges in step S19 whether or not the present time has reached a predetermined time. It is judged that the time has not reached the predetermined time (NO), and then the process is ended (step S17). On the other hand, it is judged that the time has reached the predetermined time (YES), and the process shifts to the process of step S15.

That is, according to the third embodiment, when the remaining recordable time of the HDD 35 is, for example, 30 minutes or less, and when the present time reaches any one of 00, 15, 30, 45 minutes, the instruction of the recording start can be made to the D-VHS apparatus 34.

A commercial is inserted into the program by a unit of 15 minutes in many cases. Therefore, when the instruction of the recording start to the D-VHS apparatus 34 is made at the above-described timing, the recording start in the middle of a program main part can be avoided to the utmost to ease the user's watching at reproduction time.

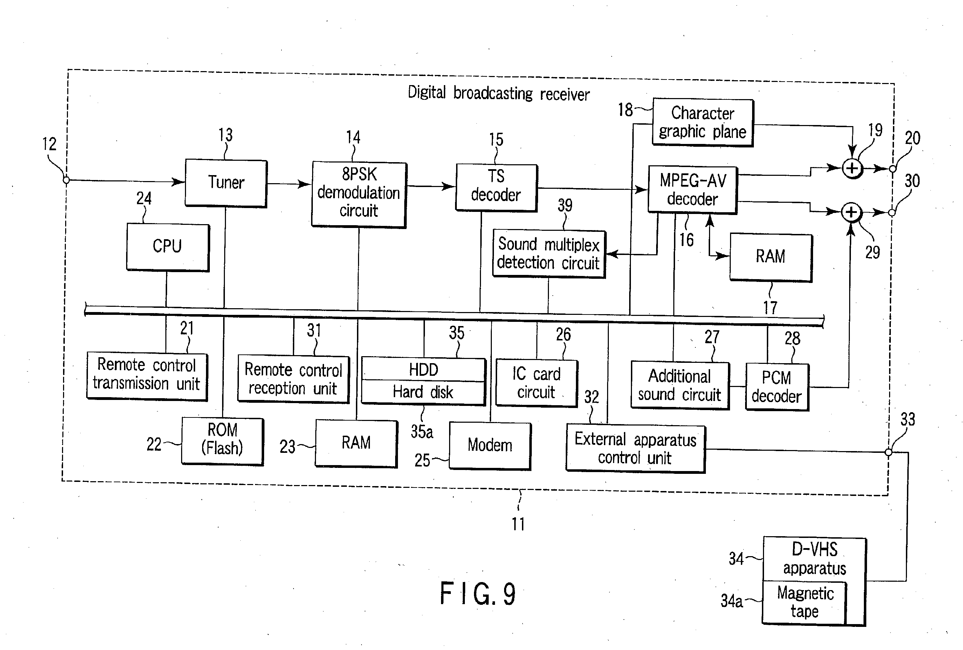

A fourth embodiment of the present invention will next be described. In FIG. 9, the same components as those of FIG. 1 are denoted with the same reference numerals. That is, a sound multiplex detection circuit 39 detects information of a sound multiplex form from the output of the MPEG-AV decoder 16.

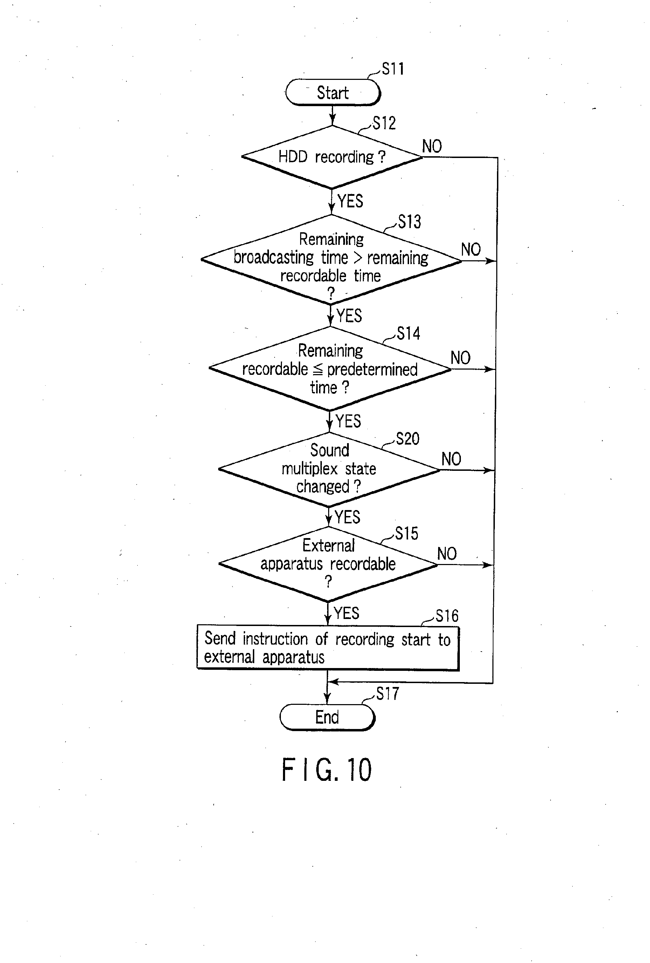

FIG. 10 shows a flowchart of the whole major recording operation in the fourth embodiment. In FIG. 10, the same steps as those of FIG. 2 are denoted with the same reference numerals.

In step S14 it is judged that the remaining recordable time of the HDD 35 is equal to or shorter than the predetermined time (YES). Then, the CPU 24 judges in step S20 whether or not the sound multiplex detection circuit 39 detects a change of a sound multiplex state. When the change is judged not to be detected (NO), the process is ended (step S17). When the change is judged to be detected (YES), the process shifts to the process of step S15.

That is, for example, bilingual broadcasting in the main program part is switched to stereo broadcasting during a commercial in many cases. Therefore, as in the fourth embodiment, the change of the sound multiplex state is used as a trigger to instruct the D-VHS apparatus 34 to start the recording. Thereby, the recording start from the middle of the program main part can be avoided to the utmost, and the program is easily seen by the user at reproduction time.

It is to be noted that the instruction of the recording start to the D-VHS apparatus 34 may be made after an elapse of predetermined time since the change of the sound multiplex state. Moreover, the trigger is not limited to the change of the sound multiplex state. When superimposed title information of the program changes, the D-VHS apparatus 34 may also be instructed to start the recording.

A fifth embodiment of the present invention will next be described. In the fifth embodiment, when the recordable time of the HDD 35 is shorter than the estimated time of the program at recording start time, the recording instruction into the external apparatus is made simultaneously with the recording onto the HDD 35.

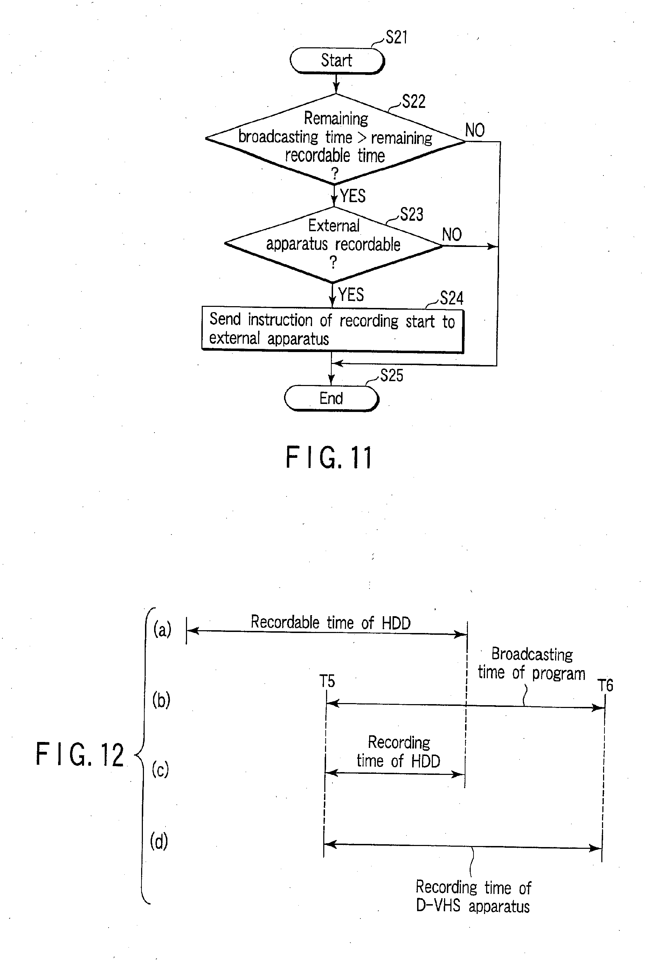

FIG. 11 shows a flowchart of the whole major operation in the fifth embodiment. First, the process is started (step S21), and the CPU 24 then judges in step S22 whether or not a remaining broadcasting time of the reserved/recorded program is longer than the remaining recordable time of the HDD 35. When the time is judged to be equal or shorter (NO), the process is ended (step S25).

Moreover, the remaining broadcasting time of the reserved/recorded program is judged to be longer than the remaining recordable time of the HDD 35 (YES), and then the CPU 24 judges in step S23 whether or not the external apparatus (D-VHS apparatus 34) is recordable. When the apparatus is judged not to be recordable (NO), the process is ended (step S25).

On the other hand, when the external apparatus is judged to be recordable (YES), in step S24 the CPU 24 sends the instruction of the recording start to the D-VHS apparatus 34 via the external apparatus control unit 32, and ends the process (step S25).

FIG. 12 shows the recording operation of the HDD 35 and recording operation of the D-VHS apparatus 34 in the fifth embodiment in the time series manner. It is assumed that first at a predetermined time T5 in the recordable time of the HDD 35 shown in (a) of FIG. 12, as shown in (b) of FIG. 12, the broadcasting of the program reserved to be recorded is started.

Then, as shown in (c), (d) of FIG. 12, at the same time T5, both the HDD 35 and D-VHS apparatus 34 starts the recording operation. Thereafter, when the broadcasting of the program is ended at time T6, the recording operation of the D-VHS apparatus 34 is also ended.

According to the fifth embodiment, when the recordable time of the HDD 35 is shorter than the estimated time of the program at the recording start time, the recording instruction to the external apparatus is made simultaneously with the recording into the HDD 35. Therefore, it is possible to record the stream information of the program in the digital television broadcasting without being interrupted.

Moreover, the order of execution of steps S22 and S23 may be arbitrary. Furthermore, in this case, the recording into the HDD 35 is started in the above-described constitution, but the constitution may be such that the recording into the HDD 35 is not performed.

Here, it is also possible to appropriately combine the timings to instruct the D-VHS apparatus 34 to start the recording described in the first to fifth embodiments in a compatible range. For example, either one of a condition of update of event information described in the second embodiment and a condition that the present time has reached the predetermined time as described in the third embodiment is satisfied. In this case, it is also possible to instruct the D-VHS apparatus 34 to start the recording.

## Claims

1. A digital broadcasting reception apparatus **characterized by** comprising:
a reception unit (13) configured to receive digital broadcasting and extract predetermined program information;
a recording unit (35) configured to digitally record program information obtained by the reception unit (13);
an external apparatus control unit (32) configured to allow a recording apparatus (34) connected to the outside to digitally record the program information obtained by the reception unit (13); and
a control unit (24) configured to allow the recording (34) apparatus to record program information which cannot be recorded in the recording unit (35) any more, when the remaining recordable time of the recording unit (35) is shorter than the total time of the program information to be recorded.

2. A digital broadcasting reception apparatus according to claim 1, **characterized in that** the control unit (24) instructs the recording apparatus (34) to start the recording, while the recording unit (35) is recording the program information and when the remaining recordable time of the recording unit (35) becomes shorter than a preset predetermined time.

3. A digital broadcasting reception apparatus according to claim 1, **characterized in that** the control unit (24) instructs the recording apparatus (34) to start the recording, while the recording unit (35) is recording the program information and when the remaining recordable time of the recording unit (35) becomes shorter than a preset predetermined time and before or after the predetermined time at which event information of the program is updated.

4. A digital broadcasting reception apparatus according to claim 1, **characterized in that** the control unit (24) instructs the recording apparatus (34) to start the recording, while the recording unit (35) is recording the program information and when the remaining recordable time of the recording unit (35) becomes shorter than a preset predetermined time and when the present time has reached a preset predetermined time.

5. A digital broadcasting reception apparatus according to claim 1, **characterized in that** the control unit (24) instructs the recording apparatus (34) to start the recording, while the recording unit (35) is recording the program information and when the remaining recordable time of the recording unit (35) becomes shorter than a preset predetermined time and when the sound multiplex state of the program changes.

6. A digital broadcasting reception apparatus according to claim 1, **characterized in that** the control unit (24) instructs the recording apparatus (34) to start the recording, while the recording unit (35) is recording the program information and when the remaining recordable time of the recording unit (35) becomes shorter than a preset predetermined time and when superimposed title information of the program changes.

7. A digital broadcasting reception apparatus according to claim 1, **characterized in that** the control unit (24) executes control so as to record the program information from the top in the recording apparatus (34), when the remaining recordable time of the recording unit (35) is shorter than the total time of the program information to be recorded.

8. A digital broadcasting reception apparatus according to claim 7, **characterized in that** the control unit (24) executes control so as to record the program information also in the recording unit (35), while the program information is being recorded in the recording apparatus (34).

9. A digital broadcasting reception apparatus according to claim 7, **characterized in that** the control unit (24) executes control so as not to record the program information in the recording unit (35), while the program information is being recorded in the recording apparatus (34).

10. A control method of a digital broadcasting reception apparatus including a reception unit (13) adapted to receive digital broadcasting and extract predetermined program information, a recording unit (35) adapted to digitally record program information obtained by the reception unit (13), and an external apparatus control unit (32) adapted to digitally record the program information obtained by the reception unit (13) with respect to a recording apparatus (34) connected to the outside, the method **characterized by** comprising:
controlling the digital broadcasting reception apparatus so as to record the program information which cannot be recorded in the recording unit (35) any more in the recording apparatus (34), when the remaining recordable time of the recording unit (35) is shorter than the total time of the program information to be recorded.

11. A control method of a digital broadcasting reception apparatus according to claim 10, **characterized by** further comprising: instructing the recording apparatus (34) to start the recording, while the recording unit (35) is recording the program information and when the remaining recordable time of the recording unit (35) becomes shorter than a preset predetermined time.

12. A control method of a digital broadcasting reception apparatus according to claim 10, **characterized by** further comprising: instructing the recording apparatus (34) to start the recording, while the recording unit (35) is recording the program information and when the remaining recordable time of the recording unit (35) becomes shorter than a preset predetermined time and before or after the predetermined time at which event information of the program is updated.

13. A control method of a digital broadcasting reception apparatus according to claim 10, **characterized by** further comprising: instructing the recording apparatus (34) to start the recording, while the recording unit (35) is recording the program information and when the remaining recordable time of the recording unit (35) becomes shorter than a preset predetermined time and when the present time has reached a preset predetermined time.

14. A control method of a digital broadcasting reception apparatus according to claim 10, **characterized by** further comprising: controlling the digital broadcasting reception apparatus so as to instruct the recording apparatus (34) to start the recording, while the recording unit (35) is recording the program information and when the remaining recordable time of the recording unit (35) becomes shorter than a preset predetermined time and when the sound multiplex state of the program changes.

15. A control method of a digital broadcasting reception apparatus according to claim 10, **characterized by** further comprising: instructing the recording apparatus (34) to start the recording, while the recording unit (35) is recording the program information and when the remaining recordable time of the recording unit (35) becomes shorter than a preset predetermined time and when superimposed title information of the program changes.

16. A control method of a digital broadcasting reception apparatus according to claim 10, **characterized by** further comprising: controlling the digital broadcasting reception apparatus so as to record the program information from the top in the recording apparatus (34), when the remaining recordable time of the recording unit (35) is shorter than the total time of the program information to be recorded.

17. A control method of a digital broadcasting reception apparatus according to claim 16, **characterized by** further comprising: controlling the digital broadcasting reception apparatus so as to record the program information also in the recording unit (35), while the program information is being recorded in the recording apparatus (34).

18. A control method of a digital broadcasting reception apparatus according to claim 16, **characterized by** further comprising: controlling the digital broadcasting reception apparatus so as to prevent the program information from being recorded in the recording unit (35), while the program information is being recorded in the recording apparatus (34).
